# EUROPÄISCHE PATENTANMELDUNG

(11) **EP 2 320 097 A1**
(43) Veröffentlichungstag der Anmeldung: **11.05.2011**
(21) Anmeldenummer: 10014357.7
(22) Anmeldetag: 06.11.2010
(51) Int. Cl.: F16B 37/04

(54) **Käfigmutter**

(30) Priorität: 10.11.2009 DE 102009052415
(71) Anmelder: NEDSCHROEF PLETTENBERG GmbH, 58840 Plettenberg (DE)
(72) Erfinder: Ferreau, Oliver, 44799 Bochum (DE); Teper, Emrullah, 44388 Dortmund (DE); Peil, Andreas, 58640 Iserlohn (DE); Calitri, Canio, 58762 Altena (DE)
(74) Vertreter: Dörner, Kötter & Kollegen

(57) **Zusammenfassung**

Die Erfindung betrifft eine Käfigmutter, umfassend eine Mutter, die in einem Halteblech unverlierbar schwimmend gehalten ist, wobei das Halteblech in Art eines C-Profils ausgebildet ist und die Mutter außen einen umlaufenden Flansch aufweist, der von Schenkeln des Halteblechs bügelartig umgriffen ist, wobei die Mutter bei an den Schenkeln anliegendem Flansch aus dem Halteblech hervorragt und wobei die Oberfläche der Mutter (2) vollständig mit einem elektrisch isolierenden Lack beschichtet ist. Die Erfindung betrifft weiterhin ein Verfahren zur Herstellung einer Käfigmutter der vorgenannten Art, wobei zunächst die Mutter (2) gezielt mit einer elektrisch isolierenden Lackschicht versehen wird, diese nachfolgend in ein Halteblech (1) verbracht wird, wobei die Schenkel (13) des Halteblechs (1) bügelartig um den Flansch (22) der Mutter (2) gebogen werden, so dass die Mutter (2) in dem Halteblech (1) unverlierbar schwimmend gehalten ist.

## Beschreibung

Die Erfindung betrifft eine Käfigmutter, umfassend eine Mutter, die in einem Halteblech unverlierbar schwimmend gehalten ist, nach dem Oberbegriff des Patentanspruchs 1.

Bei einer sogenannten Käfigmutter handelt es sich um einen Teil einer Schrauben-Mutter-Verbindung, über welche zu montierende Bauteile an einem Federlager festgelegt werden. Zur Vereinfachung der Montage wird die Käfigmutter im Bereich der für die Schraube bestückten Durchtrittsöffnung des Widerlagers, beispielsweise an der Karosserie eines Fahrzeugs angeschweißt. Beim späteren Eindrehen der Schraube in das Mutterngewinde bietet der Käfig eine drehfeste Abstützung für die Mutter. Gleichzeitig verhindert der Käfig ein Ausweichen der Mutter in axialer Richtung der Schraube. Zusätzliche Fixierwerkzeuge sind daher zum Eindrehen der Schraube in die Mutter nicht erforderlich.

Nach Befestigung der Käfigmutter beispielsweise an einer Karosserie eines Fahrzeugs, wird das komplette Fahrzeugbauteil lackiert. Im Zuge des Lackiervorgangs eines Karosserieteils wird der aufzutragende Lack elektrisch geladen, wobei das zu lackierende Bauteil entgegengesetzt zum aufgetragenen Lack gepolt wird. Hierdurch ist bewirkt, dass der Lack definiert auf allen Bauteilen anhaftet, welche während des Lackierprozesses unter Strom stehen. Nach Lackierung des kompletten Bauteils kann es dazu kommen, dass die Mutter innerhalb des Käfigs verklebt. Hierdurch wird die Funktion eines Toleranzausgleichs der innerhalb des Käfigs schwimmend gelagerten Mutter beeinträchtigt. Weiterhin kann es dazu kommen, dass das Gewinde der Mutter mit Lack zugesetzt wird, sodass keine Schraube in die Mutter eingeschraubt werden kann.

Hier will die Erfindung Abhilfe schaffen. Der Erfindung liegt die Aufgabe zu Grunde, eine Käfigmutter zu schaffen, bei der ein Verkleben der Mutter innerhalb des Halteblechs sowie ein Zusetzen des Mutterngewindes vermieden ist. Gemäß der Erfindung wird diese Aufgabe durch die Merkmale des kennzeichnenden Teils des Patentanspruchs 1 gelöst.

Mit der Erfindung ist eine Käfigmutter geschaffen, bei der ein Verkleben der Mutter innerhalb des Halteblechs sowie ein Zusetzen des Mutterngewindes vermieden ist. Durch die Beschichtung der Mutternoberfläche mit einem elektrisch isolierenden Lack ist eine Isolierung zwischen Mutter und Halteblech bewirkt. Durch die Isolierung der Mutter ist ein elektrischer Kontakt zum Halteblech verhindert, wodurch einer Lackanhaftung an der Mutter während des Lackierprozesses entgegengewirkt ist.

In Weiterbildung der Erfindung ist die elektrisch isolierende Lackschicht im Bereich des Mutterngewindes derart dimensioniert, dass das Einschrauben einer Schraube möglich ist. Hierdurch ist eine elektrische Entkopplung des Mutterngewindes ohne Beeinträchtigung dessen Funktion ermöglicht. Dabei weist die elektrisch isolierende Lackschicht im Bereich des Mutterngewindes vorteilhaft eine Schichtstärke zwischen 6 und 25 µm, vorzugsweise zwischen 8 und 20 µm auf.

In Ausgestaltung der Erfindung ist die Mutter mit KTC-Lack (kathodischer Elektrotauchlack) beschichtet. Durch die kathodische Elektrotauchlackierung ist ein geschlossener, haftender Lackfilm geringer Schichtdicke realisierbar.

Der Erfindung liegt weiterhin die Aufgabe zu Grunde, ein Verfahren zur Herstellung einer Käfigmutter bereitzustellen, bei der ein Verkleben der Mutter sowie ein Zusetzen des Mutterngewindes vermieden wird. Gemäß der Erfindung wird diese Aufgabe durch die Merkmale des Patentanspruchs 5 gelöst.

Mit der Erfindung ist ein Verfahren zur Herstellung einer Käfigmutter geschaffen, bei der ein Verkleben der Mutter sowie ein Zusetzen des Mutterngewindes vermieden ist.

In Weiterbildung der Erfindung erfolgt die Beschichtung der Mutter durch kathodisches Tauchlackieren. Das Grundprinzip des Elektrotauchlackierens besteht darin, wasserlösliche Bindemittel an der Oberfläche des als Elektrode geschalteten Lackiergutes auszufällen und so einen geschlossenen, haftenden Lackfilm zu erzeugen. Beim kathodischen Tauchlackieren erfolgt die Lackabscheidung in Folge von chemischen Umsetzungen des Bindemittels. Umgesetzt wird dies durch einen elektronischen Stromfluss von einer äußeren Elektrode (Anode) über den leitfähigen Lack zum Lackiergut (Kathode).

Bevorzugt wird die Lackschicht im Tauch-Schleuderverfahren auf die Mutter aufgebracht. Dieses Verfahren ermöglicht die prozesssichere Applikation von Schichtdicken im Mikrometerbereich.

In Ausgestaltung der Erfindung ist die aufgebrachte Lackschicht eingefärbt. Unterschiedliche Einfärbungen der Muttern ermöglichen die Unterscheidung von gleichgroßen Muttern mit unterschiedlichen Gewindegrößen.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:

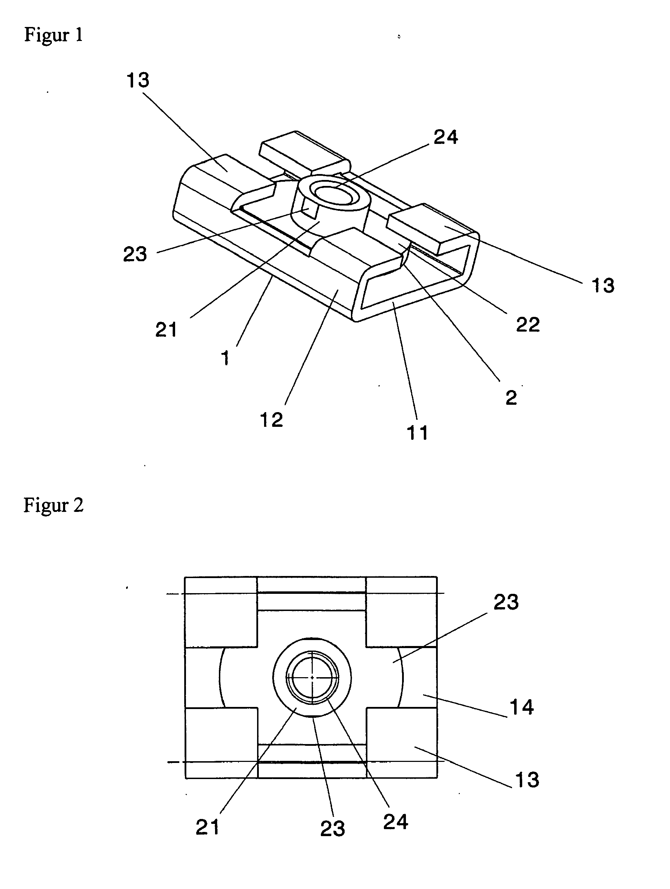

- Fig. 1: die dreidimensionale Darstellung einer Käfigmutter;
- Fig. 2: die Darstellung der Käfigmutter aus Figur 1 in der Ansicht von oben;

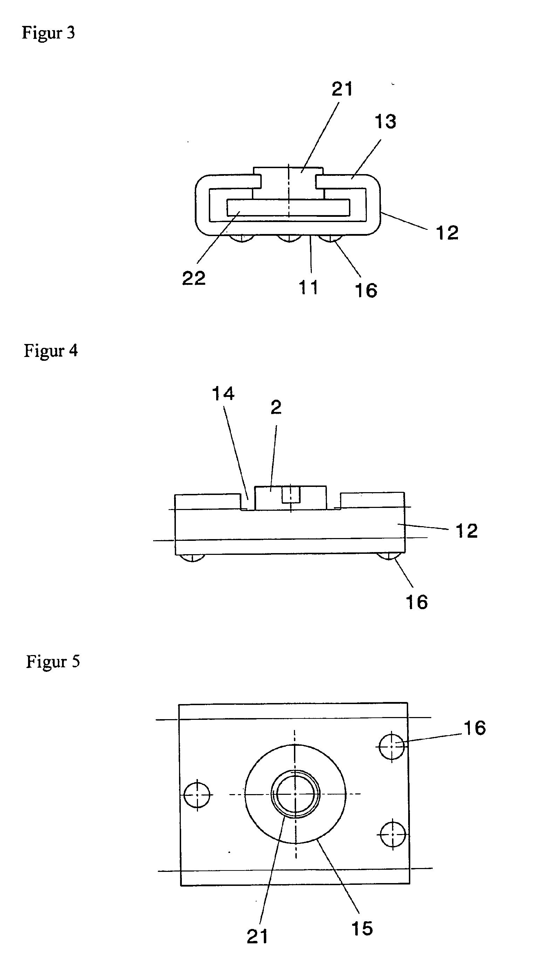

- Fig. 3: die Darstellung der Käfigmutter aus Fig. 1 in der Seitenansicht;
- Fig. 4: die Darstellung der Käfigmutter aus Fig. 1 in Vorderansicht;
- Fig. 5: die Darstellung der Käfigmutter aus Fig. 1 in der Ansicht von unten;

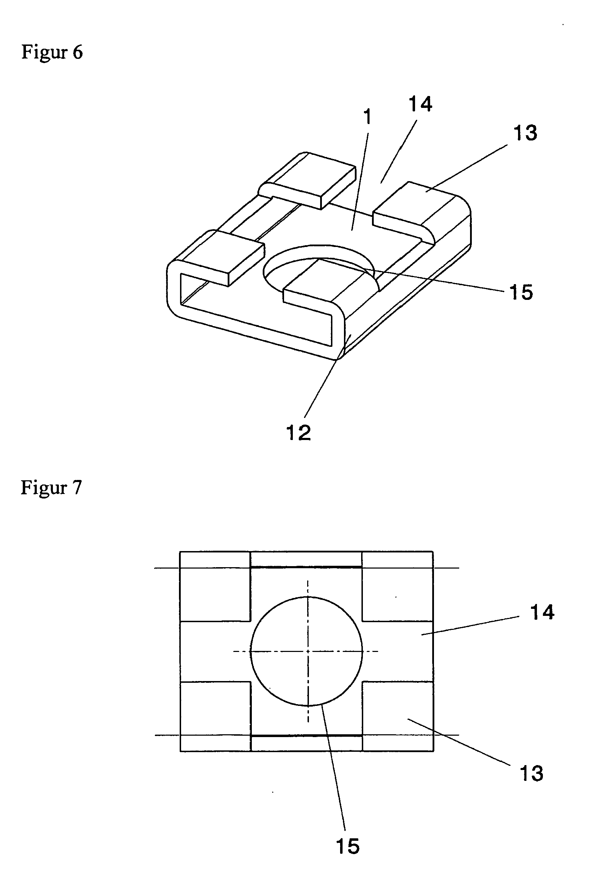

- Fig. 6: die räumliche Darstellung des Halteblechs der Käfigmutter aus Figur 1;
- Fig. 7: die Darstellung des Halteblechs aus Figur 6 in der Ansicht von oben;

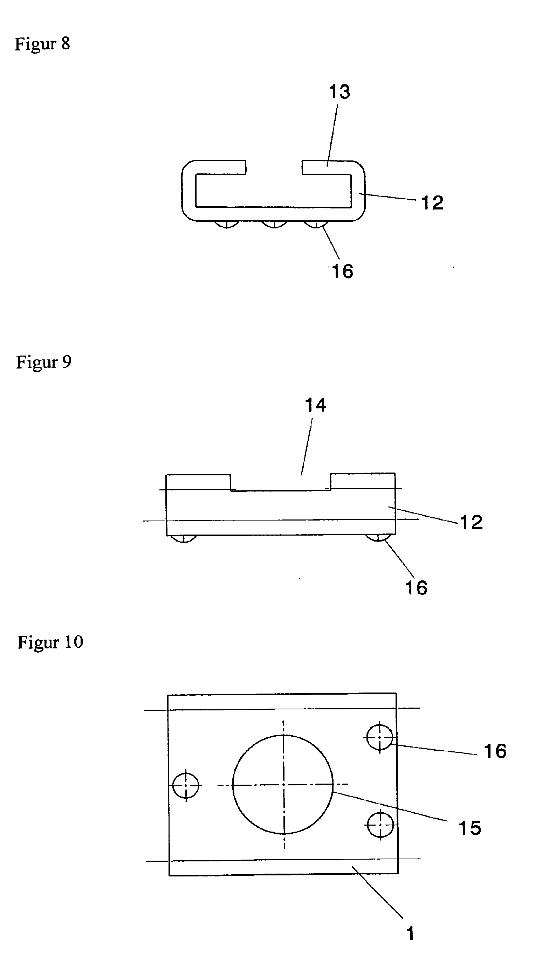

- Fig. 8: die Darstellung des Halteblechs aus Figur 6 in der Seitenansicht;
- Fig. 9: die Darstellung des Halteblechs aus Figur 6 in der Vorderansicht und
- Fig. 10: die Darstellung des Halteblechs aus Figur 6 in der Ansicht von unten.

Die als Ausführungsbeispiel gewählte Käfigmutter besteht aus einem Halteblech 1, in dem eine Mutter 2 unverlierbar schwimmend gehalten ist.

Das Halteblech 1 ist in Art eines C-Profils ausgebildet. Dabei sind von dessen Deckseite 11 an zwei gegenüberliegenden Seiten Seitenwände 12 abgekantet, an deren beiden Enden jeweils gegenüberliegend zwei Schenkel 13 angeformt und parallel zur Deckseite 11 abgekantet sind. Die so angeordneten vier Schenkel 13 begrenzen eine kreuzartige Aussparung 14. Mittig dieser kreuzförmigen Aussparung 14 ist in die Deckseite 11 eine Bohrung 15 zur Durchführung eines - nicht dargestellten - Schraubenkörpers eingebracht. Auf seiner den Schenkeln 13 entgegengerichteten Oberseite sind auf der Deckseite 11 randseitig kugelabschnittartige Schweißwarzen 16 angeordnet. Im Ausführungsbeispiel sind drei Schweißwarzen 16 angeordnet, welche ein gleichschenkliges Dreieck begrenzen, dessen Symmetrieachse auf der Längsmittelachse des Halteblechs 1 liegt.

Die Mutter 2 ist im Wesentlichen gebildet durch einen hohlzylinderförmigen Mutternkörper 21, an dessen der Deckseite 11 des Halteblechs 1 zugewandten Ende umlaufend ein tellerartiger Flansch 22 angeformt ist. Der Flansch 22 ist im Wesentlichen kreisförmig und an seinen den Seitenwänden 12 des Halteblechs 11 zugewandten Seiten abgeflacht ausgeführt. Parallel zu den abgeflachten Seiten des Flansches 22 weist der Mutternkörper 21 außen eine plane Fläche 23 auf. Diese Fläche ist ein Walzenabdruck von zwei parallelen Walzen, zwischen welche die Mutter im Ausführungsbeispiel geführt wurde, um eine leichte "Ovalisierung" der Mutter als Selbstsicherungsmaßnahme zu erzielen. Innen ist in den Mutternkörper 21 ein Innengewinde 24 eingeformt.

Im Ausführungsbeispiel ist die Mutter 2 im Tauch-Schleuderverfahren mit einer gleichmäßigen KTL-Lackschicht versehen. Dieser Lack wird elektrisch isolierend und entspricht weitestgehend dem später auf das gesamte Bauteil, an dem die Käfigmutter befestigt werden soll, aufgebrachten Lack. Im Ausführungsbeispiel handelt es sich bei dem Innengewinde 24 um ein Gewinde der Größe M10. Die Schichtdicke der aufgebrachten KTL-Lackschicht beträgt 10 µm.

Es hat sich gezeigt, dass zur Gewährleistung der Funktionsfähigkeit der Gewindegänge des Innengewindes 24 bei den Gewindeabmessungen M8, M10 und M12 die Schichtdicke des KTL-Lacks zwischen 8 und 15 µm betragen sollte. Bei den Gewindegrößen M14 und M16 sollte die Schichtdicke unter 20 µm betragen.

Die Mutter 2 ist derart in das Halteblech eingebracht, dass der Flansch 22 zwischen der Deckseite 11 und den Schenkeln 13 des Halteblechs 1 angeordnet und auf den Schenkeln 13 aufliegt, wobei der Mutternkörper 21 durch die von den Schenkeln 13 gebildete kreuzartige Aussparung 14 mittig hindurchtritt. Die Bohrung 15 des Halteblechs 1 ist dabei größer ausgebildet, als der Innendurchmesser des Mutternkörpers 21. Hierdurch ist ein Ausgleich von Fertigungstoleranzen des mit der Käfigmutter zu befestigenden Bauteils ermöglicht.

## Patentansprüche

1. Käfigmutter, umfassend eine Mutter, die in einem Halteblech unverlierbar schwimmend gehalten ist, wobei das Halteblech in Art eines C-Profils ausgebildet ist und die Mutter außen einen umlaufenden Flansch aufweist, der von Schenkeln des Halteblechs bügelartig umgriffen ist, wobei die Mutter bei an den Schenkeln anliegendem Flansch aus dem Halteblech hervorragt, **dadurch gekennzeichnet, dass** die Oberfläche der Mutter (2) vollständig mit einem elektrisch isolierenden Lack beschichtet ist.

2. Käfigmutter nach Anspruch 1, **dadurch gekennzeichnet, dass** die elektrisch isolierende Lackschicht im Bereich des Mutterngewindes (24) derart dimensioniert ist, dass das Einschrauben einer Schraube möglich ist.

3. Käfigmutter nach Anspruch 2, **dadurch gekennzeichnet, dass** die elektrisch isolierende Lackschicht im Bereich des Mutterngewindes (24) eine Schichtstärke zwischen 6 und 25 µm, vorzugsweise zwischen 8 und 20 µm aufweist.

4. Käfigmutter nach einem der vorgenannten Ansprüche, **dadurch gekennzeichnet, dass** die Mutter (2) mit KTL-Lack beschichtet ist.

5. Verfahren zur Herstellung einer Käfigmutter nach einem der vorgenannten Ansprüche, wobei zunächst die Mutter (2) gezielt mit einer elektrisch isolierenden Lackschicht versehen wird, diese nachfolgend in ein Halteblech (1) verbracht wird, wobei die Schenkel (13) des Halteblechs (1) bügelartig um den Flansch (22) der Mutter (2) gebogen werden, so dass die Mutter (2) in dem Halteblech (1) unverlierbar schwimmend gehalten ist.

6. Verfahren nach Anspruch 5, **dadurch gekennzeichnet, dass** die Lackschicht durch einen KTL-Lack gebildet ist.

7. Verfahren nach Anspruch 6, **dadurch gekennzeichnet, dass** die Lackschicht im Tauch-Schleuderverfahren auf die Mutter (2) aufgebracht wird.

8. Verfahren nach einem der vorgenannten Ansprüche, **dadurch gekennzeichnet, dass** die Lackschicht eingefärbt ist.
